(19)

Europäisches
Patentamt
European
Patent Office
Office européen
des brevets

(11) **EP 2 818 784 A1**

(12) **EUROPEAN PATENT APPLICATION**
published in accordance with Art. 153(4) EPC

(43) Date of publication:
**31.12.2014 Bulletin 2015/01**

(21) Application number: **13752162.1**

(22) Date of filing: **13.02.2013**

(51) Int Cl.:
*F16L 59/00* (2006.01)   *B32B 5/26* (2006.01)
*G10K 11/16* (2006.01)

(86) International application number:
**PCT/JP2013/053401**

(87) International publication number:
**WO 2013/125411 (29.08.2013 Gazette 2013/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **21.02.2012 JP 2012034822**

(71) Applicant: **Nichias Corporation
Tokyo 104-8555 (JP)**

(72) Inventors:
• **ITO Taichi**
**Tokyo 1048555 (JP)**
• **SHINDO, Yasuyuki**
**Tokyo 1048555 (JP)**
• **KAKIUCHI, Ryuji**
**Tokyo 1048555 (JP)**

(74) Representative: **Müller-Boré & Partner
Patentanwälte PartG mbB
Friedenheimer Brücke 21
80639 München (DE)**

(54) **SOUND-BLOCKING HEAT-INSULATING MAT ASSEMBLY AND METHOD FOR ASSEMBLING SOUND-BLOCKING HEAT-INSULATING MAT ASSEMBLY**

(57) A sound-insulating heat-insulating mat assembly exhibits excellent heat-insulating properties and sound-insulating properties, and can be easily produced (constructed). The sound-insulating heat-insulating mat assembly includes a first covering layer formed by connecting a plurality of heat-insulating mats, and a second covering layer formed by connecting a plurality of sound-insulating heat-insulating mats, the first covering layer and the second covering layer being sequentially stacked on a covering target, each of the heat-insulating mats being formed by wrapping a fibrous formed article in an exterior material, each of the sound-insulating heat-insulating mats being formed by wrapping a laminate of a fibrous formed article and a sound-insulating sheet in an exterior material, and the second covering layer being formed by connecting the sound-insulating heat-insulating mats so that the side on which the sound-insulating sheet is provided is situated on the outer surface side, and being stacked so that at least some of the joints between the sound-insulating heat-insulating mats that form the second covering layer do not overlap the formation positions of the joints between the heat-insulating mats that form the first covering layer in the stacking direction.

【Fig3】

**Description**

TECHNICAL FIELD

The invention relates to a sound-insulating heat-insulating mat assembly (a sound-insulating and heat-insulating mat assembly) and a method for assembling a sound-insulating heat-insulating mat assembly.

BACKGROUND ART

In order to suppress release of heat from a large turbine, a compressor, a generator, an engine, and the like used in factories, a heat-insulating covering material is normally provided to the outer wall surface of a pipe or the outer wall surface of a heating chamber, for example.

The covering material may be prepared by wrapping a fibrous heat-insulating material such as rock wool or glass wool in an exterior material formed of a heat-resistant fiber cloth such as glass cloth. For example, Patent Document 1 (JP-UM-A-2-49435) discloses a covering material in which a heat-insulating material is provided between an outer covering material formed of a silicone-coated glass cloth and an inner covering material formed of an alkali-resistant glass cloth.

RELATED-ART DOCUMENT

PATENT DOCUMENT

Patent Document 1: JP-UM-A-2-49435

SUMMARY OF THE INVENTION

TECHNICAL PROBLEM

However, since a large turbine, a compressor, a generator, an engine, and the like generate a considerable operating noise, a reduction in operating noise is desired when a large turbine and the like are installed in the vicinity a residential area. Moreover, since communication between the workers is hindered by the operating noise, the work efficiency deteriorates, and the burden imposed on the workers increases.

Therefore, a covering material that can thermally insulate such an apparatus while effectively insulating operating noise has been desired in recent years. However, such a covering material has not yet been proposed.

In view of the above situation, an object of the invention is to provide a sound-insulating heat-insulating mat assembly that exhibits excellent heat-insulating properties and sound-insulating properties, and can be easily produced (constructed), and a method that can easily assemble the sound-insulating heat-insulating mat assembly.

SOLUTION TO PROBLEM

The inventors of the invention conducted extensive studies in order to achieve the above object. As a result, the inventors found that the above object can be achieved by a sound-insulating heat-insulating mat assembly that includes a first covering layer formed by connecting a plurality of heat-insulating mats, and a second covering layer formed by connecting a plurality of sound-insulating heat-insulating mats, the first covering layer and the second covering layer being sequentially stacked on a covering target, each of the plurality of heat-insulating mats being formed by wrapping a fibrous formed article in an exterior material, each of the plurality of sound-insulating heat-insulating mats being formed by wrapping a laminate of a fibrous formed article and a sound-insulating sheet in an exterior material, the second covering layer being formed by connecting the plurality of sound-insulating heat-insulating mats so that a side on which the sound-insulating sheet is provided is situated on an outer surface side, and the first covering layer and the second covering layer being stacked so that at least some of joints between the plurality of sound-insulating heat-insulating mats that form the second covering layer do not overlap formation positions of joints between the plurality of heat-insulating mats that form the first covering layer in a stacking direction, and a method for assembling the sound-insulating heat-insulating mat assembly. This finding has led to the completion of the invention.

Specifically, several aspects of the invention provide the following.

    (1) A sound-insulating heat-insulating mat assembly including a first covering layer formed by connecting a plurality of heat-insulating mats, and a second covering layer formed by connecting a plurality of sound-insulating heat-insulating mats, the first covering layer and the second covering layer being sequentially stacked on a covering target,

each of the plurality of heat-insulating mats being formed by wrapping a fibrous formed article in an exterior material, each of the plurality of sound-insulating heat-insulating mats being formed by wrapping a laminate of a fibrous formed article and a sound-insulating sheet in an exterior material, and

the second covering layer being formed by connecting the plurality of sound-insulating heat-insulating mats so that a side on which the sound-insulating sheet is provided is situated on an outer surface side, and being stacked so that at least some of joints between the plurality of sound-insulating heat-insulating mats that form the second covering layer do not overlap formation positions of joints between the plurality of heat-insulating mats that form the first covering layer in a stacking direction.

(2) The sound-insulating heat-insulating mat assembly according to (1), wherein the fibrous formed article that forms each of the plurality of heat-insulating mats is formed of inorganic fibers or organic fibers, the exterior material that forms each of the plurality of heat-insulating mats is formed of an inorganic fiber cloth, the fibrous formed article that forms each of the plurality of sound-insulating heat-insulating mats is formed of inorganic fibers or organic fibers, the exterior material that forms each of the plurality of sound-insulating heat-insulating mats is formed of an inorganic fiber cloth, and the sound-insulating sheet is formed of a resin, a metal, a composite material of a resin and a metal, or a composite material that includes a synthetic rubber, heat-resistant fibers, an inorganic filler, and a vulcanizing agent.

(3) The sound-insulating heat-insulating mat assembly according to (1) or (2), wherein the covering target is an apparatus that generates low-frequency operating noise.

(4) A method for assembling a sound-insulating heat-insulating mat assembly including placing and connecting a plurality of heat-insulating mats on a surface of a covering target to form a first covering layer, and placing and connecting a plurality of sound-insulating heat-insulating mats on the first covering layer to form a second covering layer,

each of the plurality of heat-insulating mats being formed by wrapping a fibrous formed article in an exterior material, each of the plurality of sound-insulating heat-insulating mats being formed by wrapping a laminate of a fibrous formed article and a sound-insulating sheet in an exterior material,

the second covering layer being formed by connecting the plurality of sound-insulating heat-insulating mats so that a side on which the sound-insulating sheet is provided is situated on an outer surface side, and being placed so that at least some of joints between the plurality of sound-insulating heat-insulating mats that form the second covering layer do not overlap formation positions of joints between the plurality of heat-insulating mats that form the first covering layer in a stacking direction.

(5) The method for assembling a sound-insulating heat-insulating mat assembly according to (4), wherein the fibrous formed article that forms each of the plurality of heat-insulating mats is formed of inorganic fibers, the exterior material that forms each of the plurality of heat-insulating mats is formed of an inorganic fiber cloth, the fibrous formed article that forms each of the plurality of sound-insulating heat-insulating mats is formed of inorganic fibers, the exterior material that forms each of the plurality of sound-insulating heat-insulating mats is formed of an inorganic fiber cloth, and the sound-insulating sheet is formed of a resin, a metal, or a composite material of a resin and a metal.

(6) The method for assembling a sound-insulating heat-insulating mat assembly according to (4) or (5), wherein the covering target is an apparatus that generates low-frequency operating noise.

ADVANTAGEOUS EFFECTS OF THE INVENTION

The aspects of the invention thus provide a sound-insulating heat-insulating mat assembly that exhibits excellent heat-insulating properties and sound-insulating properties, and can be easily produced (constructed), and a method that can easily assemble the sound-insulating heat-insulating mat assembly.

BRIEF DESCRIPTION OF DRAWINGS

FIG. 1A is a top view illustrating a heat-insulating mat that forms a sound-insulating heat-insulating mat assembly according to one embodiment of the invention, FIG. 1B is a schematic cross-sectional view taken along the line A-A' in FIG. 1A, FIG. 1C is a top view illustrating a heat-insulating mat that forms a sound-insulating heat-insulating mat assembly according to one embodiment of the invention, and is provided with an edge part, and FIG. 1D is a schematic cross-sectional view corresponding to FIG. 1B.

FIG. 2A is a top view illustrating a sound-insulating heat-insulating mat that forms a sound-insulating heat-insulating mat assembly according to one embodiment of the invention, FIG. 2B is a schematic cross-sectional view taken along the line B-B' in FIG. 2A, FIG. 2C is a top view illustrating a sound-insulating heat-insulating mat that forms a sound-insulating heat-insulating mat assembly according to one embodiment of the invention, and is provided with an edge part, and FIG. 2D is a schematic cross-sectional view corresponding to FIG. 2B.

FIG. 3 is a schematic cross-sectional view illustrating an example of a sound-insulating heat-insulating mat that forms a sound-insulating heat-insulating mat assembly according to one embodiment of the invention.

FIG. 4A is a top view illustrating a first covering layer, FIG. 4B is a schematic cross-sectional view taken along the line A-A' in FIG. 4A, and FIG. 4C is a schematic cross-sectional view taken along the line B-B' in FIG. 4A.

FIG. 5A is a top view illustrating a sound-insulating heat-insulating mat assembly according to one embodiment of the invention, FIG. 5B is a schematic cross-sectional view taken along the line A-A' in FIG. 5A, and FIG. 5C is a schematic cross-sectional view taken along the line B-B' in FIG. 5A.

FIG. 6 is a view illustrating sound transmission loss property evaluation results obtained in the examples of the invention.

FIG. 7 is a view illustrating sound transmission loss property evaluation results obtained in the comparative examples of the invention.

FIG. 8 is a schematic cross-sectional view illustrating a sound-insulating heat-insulating mat assembly obtained in the example of the invention.

FIG. 9 is a schematic cross-sectional view illustrating a sound-insulating heat-insulating mat assembly obtained in the example of the invention.

## DESCRIPTION OF EMBODIMENTS

A sound-insulating heat-insulating mat assembly according to one embodiment of the invention includes a first covering layer formed by connecting a plurality of heat-insulating mats, and a second covering layer formed by connecting a plurality of sound-insulating heat-insulating mats, the first covering layer and the second covering layer being sequentially stacked on a covering target, each of the plurality of heat-insulating mats being formed by wrapping a fibrous formed article in an exterior material, each of the plurality of sound-insulating heat-insulating mats being formed by wrapping a laminate of a fibrous formed article and a sound-insulating sheet in an exterior material, and the second covering layer being formed by connecting the plurality of sound-insulating heat-insulating mats so that a side on which the sound-insulating sheet is provided is situated on an outer surface side, and being stacked so that at least some of the joints between the plurality of sound-insulating heat-insulating mats that form the second covering layer do not overlap the formation positions of the joints between the plurality of heat-insulating mats that form the first covering layer in the stacking direction.

The sound-insulating heat-insulating mat assembly according to one embodiment of the invention is described below while appropriately illustrating specific examples with reference to the drawings.

The covering target (on which the sound-insulating heat-insulating mat assembly is assembled) used in connection with the sound-insulating heat-insulating mat assembly according to one embodiment of the invention is not particularly limited as long as the covering target generates heat and noise to the outside. Examples of the covering target include an apparatus that generates heat and noise to the outside during operation (e.g., large turbine, compressor, generator, and engine used in factories and the like).

The sound-insulating heat-insulating mat assembly according to one embodiment of the invention may be applied to the covering target that generates noise (i.e., a sound having a frequency of about 63 to 20,000 Hz). The sound-insulating heat-insulating mat assembly according to one embodiment of the invention may particularly preferably be applied to the covering target that generates low-frequency sound (i.e., a sound having a frequency of about 63 to 160 Hz).

The sound-insulating heat-insulating mat assembly according to one embodiment of the invention has a configuration in which the first covering layer and the second covering layer are sequentially stacked on the covering target (i.e., the first covering layer is formed on the covering target, and the second covering layer is formed on the first covering layer).

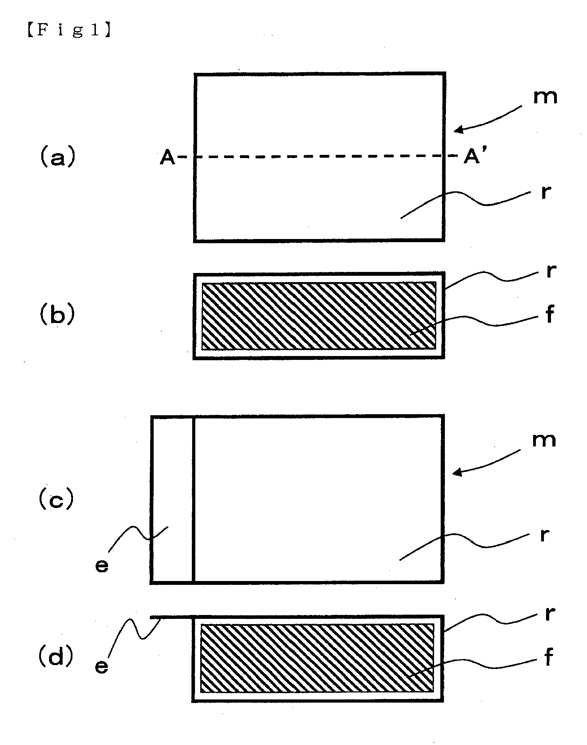

The sound-insulating heat-insulating mat assembly according to one embodiment of the invention is formed by the first covering layer and the second covering layer. As illustrated in FIG. 1A (top view) and FIG. 1B (schematic vertical cross-sectional view taken along the line A-A' in FIG. 1A), the first covering layer is formed by connecting a plurality of heat-insulating mats m that are formed by wrapping a fibrous formed article f in an exterior material r.

The fibrous formed article f that forms the heat-insulating mat m that forms the sound-insulating heat-insulating mat assembly according to one embodiment of the invention is not particularly limited as long as the fibrous formed article f is formed of heat-insulating fibers. Specific examples of the fibrous formed article f include a fibrous formed article formed of inorganic fibers (e.g., rock wool, glass wool, or ceramic fibers). When the covering target is operated at a relatively low temperature, for example, the fibrous formed article f that forms the heat-insulating mat m may be formed of organic fibers (e.g., polyamide fibers or polyester fibers such as polyethylene terephthalate fibers). The fibrous formed article f that forms the heat-insulating mat m may be formed of the inorganic fibers or the organic fibers that have biosolubility.

It is preferable that the fibrous formed article f be formed by successively stacking the fibers, forming the fibers in the shape of a blanket, and subjecting the formed fibers to needle punching, for example.

Specific examples of the fibrous formed article f include Fine Flex Blanket TOMBO No. 5120 and No. 5220-Z (manufactured by Nichias Corporation), and the like.

It is preferable that the fibrous formed article f that forms the heat-insulating mat m have a density at room temperature (25°C) of 20 to 400 kg/cm$^3$, more preferably 60 to 280 kg/cm$^3$, and still more preferably 100 to 160 kg/cm$^3$.

When the density of the fibrous formed article f that forms the heat-insulating mat m is within the above range, it is possible to easily provide the sound-insulating heat-insulating mat assembly with the desired sound-insulating properties and heat-insulating properties, and easily maintain the shape of the sound-insulating heat-insulating mat assembly. Therefore, the sound-insulating heat-insulating mat assembly can be uniformly positioned on the covering target to provide heat-insulating properties and sound-insulating properties.

It is preferable that the fibrous formed article f that forms the heat-insulating mat m have a linear shrinkage ratio of 5% or less, more preferably 4% or less, and still more preferably 3% or less.

Note that the term "linear shrinkage ratio" used herein in connection with the fibrous formed article refers to a value calculated by the following expression. Note that $Y_1$ (mm) is the length of the sample before heating the sample, and $Y_2$ (mm) is the length of the sample after heating the sample at 720°C for 1 hour in an electric furnace.

$$\text{Linear shrinkage ratio (\%)} = \{(Y_1 - Y_2)/Y_1\} \times 100$$

The thickness of the fibrous formed article f that forms the heat-insulating mat m (i.e., the dimension of the fibrous formed article f in the stacking direction (i.e., the vertical dimension of the fibrous formed article f in FIG 1B)) may be appropriately determined corresponding to the thickness of the heat-insulating mat m (i.e., the vertical dimension of the heat-insulating mat m in FIG 1).

The exterior material r that forms the heat-insulating mat m that forms the sound-insulating heat-insulating mat assembly according to one embodiment of the invention is not particularly limited as long as the exterior material r has heat resistance, can suppress scattering of the fibers that form the fibrous formed article f, and rarely breaks even when used for a long time. Specific examples of the exterior material r include exterior materials formed of an inorganic fiber cloth such as a glass fiber cloth and a ceramic fiber cloth, a silicone-coated glass cloth, a fluororesin-coated glass cloth, a resin sheet such as a porous sheet obtained by stretching and calcining an uncalcined ethylene tetrafluoride resin, and forming the resin to have a given shape, and the like.

A silicone-coated glass cloth and a fluororesin-coated glass cloth are particularly preferable when the covering target is used outdoors due to excellent water repellency and weatherability.

The exterior material r may be a material obtained by subjecting the cloth to a waterproofing treatment by applying a silicone coating agent or the like to the stitches of the cloth. Such an exterior material is also particularly preferable when the covering target is used outdoors due to excellent water repellency and weatherability.

The thickness of the exterior material r is preferably 0.1 to 4.0 mm, more preferably 0.2 to 3.0 mm, and still more preferably 0.8 to 1.5 mm.

Note that the term "thickness" used herein in connection with the exterior material refers to a value measured in accordance with JIS R 3420 (1999).

The mass (basis weight) of the exterior material r is preferably 100 to 1000 g/m$^2$, more preferably 200 to 800 g/m$^2$, and still more preferably 300 to 650 g/m$^2$.

When the thickness and the mass (basis weight) of the exterior material r are within the above ranges, it is possible to easily suppress scattering of the fibers that form the fibrous formed article f, and breakage of the fibrous formed article f.

The thickness of the heat-insulating mat m (i.e., the dimension of the heat-insulating mat m in the stacking direction (i.e., the vertical dimension of the heat-insulating mat m in FIG. 1B)) is preferably 5 to 250 mm, more preferably 50 to 175 mm, and still more preferably 75 to 125 mm.

When the thickness of the heat-insulating mat m is within the above range, it is possible to provide the sound-insulating heat-insulating mat assembly with the desired heat-insulating properties and sound-insulating properties.

The transverse dimension of the heat-insulating mat m that forms a side that faces the covering target (i.e., the dimension of the heat-insulating mat m in the rightward/leftward direction in FIG. 1A or 1B), and the vertical dimension of the heat-insulating mat m (i.e., the dimension of the heat-insulating mat m in the vertical direction in FIG. 1A), may be appropriately determined taking account of the shape of the covering target, workability, and the like.

The shape of the heat-insulating mats m that form the first covering layer need not necessarily be identical. Since the sound-insulating heat-insulating mat assembly according to one embodiment of the invention has a configuration in which the second covering layer is stacked on the first covering layer, it is preferable that the surface of the first covering layer that is situated on the outer surface side (i.e., the side of the second covering layer) be flat. Therefore, it is preferable that each heat-insulating mat m that forms the first covering layer be designed so that the surface of each heat-insulating mat m that is situated on the outer surface side is flat during assembly.

The first covering layer of the sound-insulating heat-insulating mat assembly according to one embodiment of the invention is provided on the covering target.

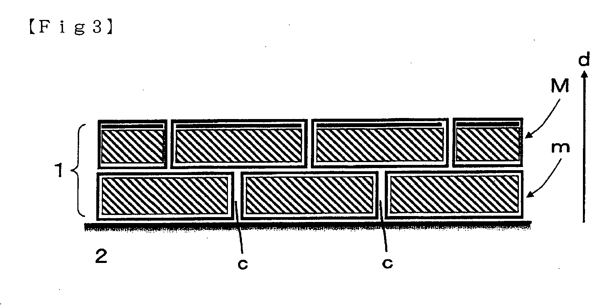

As illustrated in FIG 3 (schematic cross-sectional view), the first covering layer of the sound-insulating heat-insulating mat assembly according to one embodiment of the invention is formed by connecting a plurality of heat-insulating mats m. The first covering layer can be easily formed by connecting a plurality of heat-insulating mats m using a wire or a pressure-sensitive adhesive tape, or connecting a plurality of heat-insulating mats m in which a hook-and-loop fastener is provided to the exterior material r, for example.

As illustrated in FIG. 1C (top view) and FIG. 1D (schematic cross-sectional view), the sound-insulating heat-insulating mat assembly according to one embodiment of the invention may be configured so that the surface of the exterior material r that forms the heat-insulating mat m that is situated on the outer surface side has an edge part e that covers part or the entirety of the joint, and the edge part e covers the joint with the adjacent heat-insulating mat m. It is possible to easily provide the sound-insulating heat-insulating mat assembly according to one embodiment of the invention with waterproofness, dustproofness, and the like even when the sound-insulating heat-insulating mat assembly is used outdoors, by covering the joint with the edge part e. It is preferable that the edge part of the exterior material r be formed of the same material (member) as that of the exterior material r.

The edge part may be integrally formed with the exterior material r, or may be formed separately from the exterior material r, and attached using a hook-and-loop fastener or the like during assembly.

The first covering layer of the sound-insulating heat-insulating mat assembly according to one embodiment of the invention that is provided on the shielding target is formed by stacking at least one layer of the heat-insulating mats m. Note that about two to four layers of the heat-insulating mats m may be stacked on the shielding target (if it is allowed in terms of time, cost, and the like).

The thickness (i.e., the dimension in the stacking direction) of the first covering layer of the sound-insulating heat-insulating mat assembly according to one embodiment of the invention is preferably 5 to 250 mm, more preferably 50 to 175 mm, and still more preferably 75 to 125 mm.

When the thickness of the first covering layer is within the above range, it is possible to provide the sound-insulating heat-insulating mat assembly with the desired heat-insulating properties and sound-insulating properties.

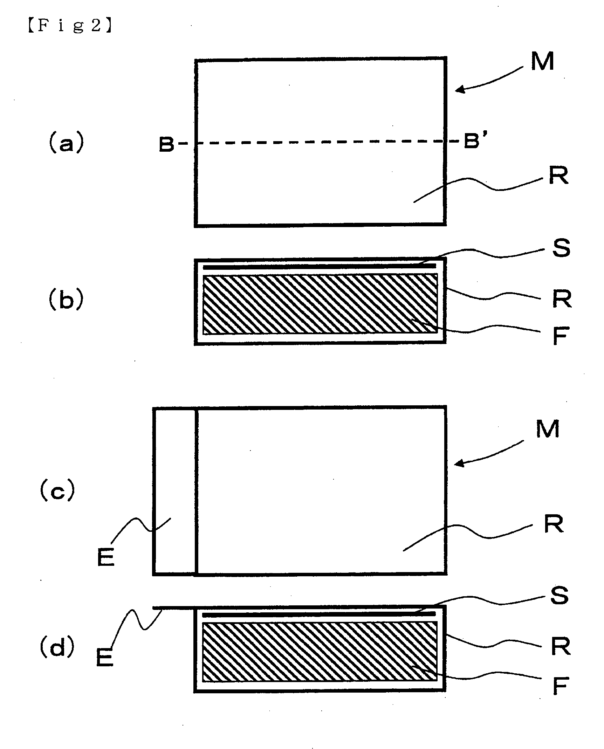

The sound-insulating heat-insulating mat assembly according to one embodiment of the invention is formed by the first covering layer and the second covering layer. As illustrated in FIG. 2A (top view) and FIG. 2B (schematic vertical cross-sectional view taken along the line B-B' in FIG. 2A), the second covering layer is formed by connecting a plurality of sound-insulating heat-insulating mats M that are formed by wrapping a fibrous formed article F and a sound-insulating sheet S in an exterior material R.

The fibrous formed article F that forms the sound-insulating heat-insulating mat M that forms the sound-insulating heat-insulating mat assembly according to one embodiment of the invention may be the same as the fibrous formed article f that forms the heat-insulating mat m.

The exterior material R that forms the sound-insulating heat-insulating mat M that forms the sound-insulating heat-insulating mat assembly according to one embodiment of the invention may be the same as the exterior material r that forms the heat-insulating mat m.

The sound-insulating sheet S that forms the sound-insulating heat-insulating mat M that forms the sound-insulating heat-insulating mat assembly according to one embodiment of the invention is not particularly limited as long as the sound-insulating sheet S can insulate sound that is generated by the covering target and is not absorbed by the heat-insulating mat m and the sound-insulating heat-insulating mat M.

The sound-insulating sheet S may be formed of a resin (e.g., polyvinyl chloride or polytetrafluoroethylene (PTFE)), a metal (e.g., lead, iron, aluminum, or alloy thereof), a composite material of a resin and a metal (e.g., a composite material obtained by adding an iron oxide powder to polyvinyl chloride), a composite material that includes a synthetic rubber, heat-resistant fibers, an inorganic filler, and a vulcanizing agent, or the like. The sound-insulating sheet S may be in the shape of a plate or a sheet.

In the composite material that includes a synthetic rubber, heat-resistant fibers, an inorganic filler, and a vulcanizing agent, examples of the synthetic rubber used for the composite material include nitrile rubber, ethylene-propylene rubber, and the like. Examples of the heat-resistant fibers used for the composite material include aramid fibers, glass fibers, rock wool, and the like. Examples of the inorganic filler used for the composite material include talc, kaolin, silica, and the like.

The composite material that includes a synthetic rubber, heat-resistant fibers, an inorganic filler, and a vulcanizing agent may be prepared by mixing a synthetic rubber, heat-resistant fibers, an inorganic filler, a vulcanizing agent, and an optional additional component, and may be compressed and formed with heating to have a dense and even thick paper shape using a calender roll.

Examples of the composite material that includes a synthetic rubber, heat-resistant fibers, an inorganic filler, and a vulcanizing agent include CLINSIL (registered trademark) Brown TOMBO No. 1995 (manufactured by Nichias Corporation), and the like.

It is preferable that the sound-insulating sheet have a density at room temperature (25°C) of 1.0 to 20.0 g/cm$^3$, more preferably 2.0 to 15.0 g/cm$^3$, and still more preferably 2.5 to 8.0 g/cm$^3$.

When the density of the sound-insulating sheet is within the above range, it is possible to easily provide the sound-insulating heat-insulating mat assembly with the desired sound-insulating properties.

The thickness of the sound-insulating sheet is preferably 0.1 to 5.0 mm, more preferably 0.5 to 4.0 mm, and still more preferably 0.8 to 1.4 mm.

Note that the term "thickness" used herein in connection with the sound-insulating sheet refers to the arithmetic mean value of the thicknesses of the sound-insulating sheet measured at three points using calipers.

The fibrous formed article that forms the heat-insulating mat m and the fibrous formed article that forms the sound-insulating heat-insulating mat M can absorb sound generated by the covering target, and suppress leakage of sound to the outside to a certain extent. However, when the covering target generates sound including low-frequency sound (a sound having a frequency of about 63 to 160 Hz), it is difficult for the fibrous formed article to completely absorb the sound. It is possible to effectively insulate sound including low-frequency sound, and reliably suppress leakage of sound generated by the covering target to the outside by providing the sound-insulating sheet S on the outer surface side of the sound-insulating heat-insulating mat M that forms the second covering layer.

The thickness of the sound-insulating heat-insulating mat M (i.e., the dimension of the sound-insulating heat-insulating mat M in the stacking direction (i.e., the vertical dimension of the sound-insulating heat-insulating mat M in FIG. 2B)) is preferably 5 to 250 mm, more preferably 50 to 175 mm, and still more preferably 75 to 125 mm.

When the thickness of the sound-insulating heat-insulating mat M is within the above range, it is possible to provide the sound-insulating heat-insulating mat assembly with the desired heat-insulating properties and sound-insulating properties.

The transverse dimension of the sound-insulating heat-insulating mat M that forms a side that faces the covering target (i.e., the dimension of the sound-insulating heat-insulating mat M in the rightward/leftward direction in FIG 2A or 2B), and the vertical dimension of the sound-insulating heat-insulating mat (i.e., the dimension of the sound-insulating heat-insulating mat M in the vertical direction in FIG. 2A), may be appropriately determined taking account of the shape of the covering target, workability, and the like.

The shape of the sound-insulating heat-insulating mats M that form the second covering layer need not necessarily be identical. Since the sound-insulating heat-insulating mat assembly according to one embodiment of the invention exhibits the desired heat-insulating properties and sound-insulating properties due to the first covering layer and the second covering layer, it is preferable that the surface of the second covering layer that is situated on the outer surface side be flat in order to provide the sound-insulating heat-insulating mat assembly with uniform heat-insulating properties and sound-insulating properties. Therefore, it is preferable that each sound-insulating heat-insulating mat M that forms the second covering layer be designed so that the surface of each sound-insulating heat-insulating mat M that is situated on the outer surface side is flat during assembly.

The second covering layer of the sound-insulating heat-insulating mat assembly according to one embodiment of the invention is formed by connecting a plurality of sound-insulating heat-insulating mats M. The second covering layer can be easily formed by connecting a plurality of sound-insulating heat-insulating mats M using a wire or a pressure-sensitive adhesive tape, or connecting a plurality of sound-insulating heat-insulating mats M in which a hook-and-loop fastener is provided to the exterior material R, for example.

As illustrated in FIG. 2C (top view) and FIG. 2D (schematic cross-sectional view), the sound-insulating heat-insulating mat assembly according to one embodiment of the invention may be configured so that the surface of the exterior material R that forms the sound-insulating heat-insulating mat M that is situated on the end of the side used as the outer surface side has an edge part E that covers part or the entirety of the joint during installation, and the edge part E covers the joint with the adjacent sound-insulating heat-insulating mat M. It is possible to easily provide the sound-insulating heat-insulating mat assembly according to one embodiment of the invention with waterproofness, dustproofness, and the like even when the sound-insulating heat-insulating mat assembly is used outdoors, by covering the joint with the edge part E. It is preferable that the edge part of the exterior material R be formed of the same material (member) as that of the exterior material R.

The edge part may be integrally formed with the exterior material R, or may be formed separately from the exterior material R, and attached using a hook-and-loop fastener or the like during assembly.

The thickness (i.e., the dimension in the stacking direction) of the second covering layer of the sound-insulating heat-insulating mat assembly according to one embodiment of the invention is preferably 5 to 250 mm, more preferably 50 to 175 mm, and still more preferably 75 to 125 mm.

When the thickness of the second covering layer is within the above range, it is possible to provide the sound-insulating heat-insulating mat assembly with the desired heat-insulating properties and sound-insulating properties.

In the sound-insulating heat-insulating mat assembly according to one embodiment of the invention, the second covering layer and the first covering layer may be appropriately connected.

The second covering layer and the first covering layer may be connected by connecting the sound-insulating heat-insulating mat M and the heat-insulating mat m using a wire or a pressure-sensitive adhesive tape, or connecting the sound-insulating heat-insulating mat M and the heat-insulating mat m in which a hook-and-loop fastener is provided to the exterior material R or the exterior material r, for example.

In the sound-insulating heat-insulating mat assembly according to one embodiment of the invention, the second covering layer is provided so that the side on which the sound-insulating sheet is provided is situated on the outer surface side. When the second covering layer is provided as described above, a sound having a relatively high frequency can be absorbed by the fibrous formed article that forms the first covering layer and the fibrous formed article that forms second covering layer, and a sound having a relatively low frequency that cannot be absorbed by each fibrous formed article can be reflected by the sound-insulating sheet to prevent leakage of sound to the outside.

The sound-insulating heat-insulating mat assembly according to one embodiment of the invention has a configuration in which the second covering layer is stacked so that at least some of the joints between the sound-insulating heat-insulating mats that form the second covering layer do not overlap the formation positions of the joints between the heat-insulating mats that form the first covering layer in the stacking direction.

As illustrated in FIG. 3, a sound-insulating heat-insulating mat assembly 1 according to one embodiment of the invention has a configuration in which the first covering layer and the second covering layer are stacked on a covering target 2 so that the joints c between the sound-insulating heat-insulating mats M that form the second covering layer do not overlap the formation positions of the joints between the heat-insulating mats m that form the first covering layer.

The sound-insulating heat-insulating mat assembly according to one embodiment of the invention is configured so that the second covering layer is stacked so that at least some of the joints between the sound-insulating heat-insulating mats that form the second covering layer do not overlap the formation positions of the joints between the heat-insulating mats that form the first covering layer in the stacking direction. It is preferable that the second covering layer be stacked so that 80 to 100% of the joints between the sound-insulating heat-insulating mats that form the second covering layer do not overlap the formation positions of the joints between the heat-insulating mats that form the first covering layer in the stacking direction. It is more preferable that the second covering layer be stacked so that 90 to 100% of the joints between the sound-insulating heat-insulating mats that form the second covering layer do not overlap the formation positions of the joints between the heat-insulating mats that form the first covering layer in the stacking direction. It is still more preferable that the second covering layer be stacked so that all of the joints between the sound-insulating heat-insulating mats that form the second covering layer do not overlap the formation positions of the joints between the heat-insulating mats that form the first covering layer in the stacking direction.

Note that the ratio X (%) by which the joints between the sound-insulating heat-insulating mats that form the second covering layer do not overlap the formation positions of the joints between the heat-insulating mats that form the first covering layer in the stacking direction is calculated by the following expression.

$$\text{Ratio X (\%)} = \{\text{total length (mm) of areas of joints between sound-insulating heat-insulating mats stacked on first covering layer that do not overlap joints between heat-insulating mats that form first covering layer / total length (mm) of joints between sound-insulating heat-insulating mats stacked on first covering layer}\} \times 100$$

Since the sound-insulating heat-insulating mat assembly according to one embodiment of the invention is formed by stacking the sound-insulating heat-insulating mats M over the joints between the heat-insulating mats m that are formed when forming the first covering layer, the second covering layer effectively absorbs sound and heat that have passed through the joints between the heat-insulating mats m to effectively insulate heat and sound generated by the covering target.

Since the sound-insulating heat-insulating mat assembly according to one embodiment of the invention includes a plurality of heat-insulating mats and a plurality of sound-insulating heat-insulating mats, and has a structure in which these mats are sequentially stacked, the sound-insulating heat-insulating mat assembly can be easily produced (constructed) without using a special tool or apparatus, and facilitates maintenance and the like.

The invention can thus provide a sound-insulating heat-insulating mat assembly that exhibits excellent heat-insulating properties and sound-insulating properties, and can be easily produced (constructed).

The sound-insulating heat-insulating mat assembly according to one embodiment of the invention may be produced using a method for assembling a sound-insulating heat-insulating mat assembly (hereinafter may be referred to as "assembly method") according to one embodiment of the invention that is described in detail below.

The method for assembling a sound-insulating heat-insulating mat assembly according to one embodiment of the invention is described below.

The method for assembling a sound-insulating heat-insulating mat assembly according to one embodiment of the invention includes placing and connecting a plurality of heat-insulating mats on the surface of a covering target to form a first covering layer, and placing and connecting a plurality of sound-insulating heat-insulating mats on the first covering layer to form a second covering layer, each of the plurality of heat-insulating mats being formed by wrapping a fibrous formed article in an exterior material, each of the plurality of sound-insulating heat-insulating mats being formed by wrapping a laminate of a fibrous formed article and a sound-insulating sheet in an exterior material, and the second covering layer being formed by connecting the plurality of sound-insulating heat-insulating mats so that the side on which the sound-insulating sheet is provided is situated on the outer surface side, and being stacked so that at least some of the joints between the plurality of sound-insulating heat-insulating mats that form the second covering layer do not overlap the formation positions of the joints between the plurality of heat-insulating mats that form the first covering layer in the stacking direction.

The details of the covering target, the heat-insulating mat, and the sound-insulating heat-insulating mat used in connection with the assembly method according to one embodiment of the invention are the same as those described above in connection with the sound-insulating heat-insulating mat assembly according to one embodiment of the invention.

In the method for assembling a sound-insulating heat-insulating mat assembly according to one embodiment of the invention, a plurality of heat-insulating mats are placed and connected on the surface of the covering target to form the first covering layer, and a plurality of sound-insulating heat-insulating mats are placed and connected on the first covering layer to form the second covering layer.

In the method for assembling a sound-insulating heat-insulating mat assembly according to one embodiment of the invention, the first covering layer is formed by placing and connecting a plurality of heat-insulating mats m (see FIG. 3 (schematic cross-sectional view)).

The first covering layer can be easily formed by connecting the heat-insulating mats using a wire or a pressure-sensitive adhesive tape, or connecting the heat-insulating mats m in which a hook-and-loop fastener is provided to the exterior material r, for example.

In the method for assembling a sound-insulating heat-insulating mat assembly according to one embodiment of the invention, at least one first covering layer is formed on the covering target. Note that about two to four first covering layers may be formed on the shielding target (if it is allowed in terms of time, cost, and the like).

A preferable range of the thickness of the first covering layer is the same as that described above in connection with the sound-insulating heat-insulating mat assembly according to one embodiment of the invention.

In the method for assembling a sound-insulating heat-insulating mat assembly according to one embodiment of the invention, the second covering layer is formed by placing and connecting a plurality of sound-insulating heat-insulating mats M (see FIG. 3 (schematic cross-sectional view)).

The second covering layer can be easily formed by connecting the sound-insulating heat-insulating mats using a wire or a pressure-sensitive adhesive tape, or connecting the sound-insulating heat-insulating mats M in which a hook-and-loop fastener is provided to the exterior material R, for example.

In the method for assembling a sound-insulating heat-insulating mat assembly according to one embodiment of the invention, the second covering layer and the first covering layer may be appropriately connected.

The second covering layer and the first covering layer can be easily connected by connecting the sound-insulating heat-insulating mat M and the heat-insulating mat m using a wire or a pressure-sensitive adhesive tape, or connecting the sound-insulating heat-insulating mat M in which a hook-and-loop fastener is provided to the exterior material R and the heat-insulating mat m in which a hook-and-loop fastener is provided to the exterior material r, for example.

In the method for assembling a sound-insulating heat-insulating mat assembly according to one embodiment of the invention, the second covering layer is formed by connecting the sound-insulating heat-insulating mats M so that the side on which the sound-insulating sheet is provided is situated on the outer surface side, and is stacked so that at least some of the joints between the sound-insulating heat-insulating mats M that form the second covering layer do not overlap the formation positions of the joints between the heat-insulating mats m that form the first covering layer in the stacking direction d (see FIG. 3 (schematic cross-sectional view)).

In the method for assembling a sound-insulating heat-insulating mat assembly according to one embodiment of the invention, it is preferable that the second covering layer be stacked so that 80 to 100% of the joints between the sound-insulating heat-insulating mats that form the second covering layer do not overlap the formation positions of the joints between the heat-insulating mats that form the first covering layer in the stacking direction. It is more preferable that the second covering layer be stacked so that 90 to 100% of the joints between the sound-insulating heat-insulating mats that form the second covering layer do not overlap the formation positions of the joints between the heat-insulating mats that form the first covering layer in the stacking direction. It is still more preferable that the second covering layer be stacked so that all of the joints between the sound-insulating heat-insulating mats that form the second covering layer do not overlap the formation positions of the joints between the heat-insulating mats that form the first covering layer in the stacking direction.

Note that the ratio (%) by which the joints between the sound-insulating heat-insulating mats that form the second covering layer do not overlap the formation positions of the joints between the heat-insulating mats that form the first covering layer in the stacking direction is calculated by the above expression.

A preferable range of the thickness of the second covering layer is the same as that described above in connection with the sound-insulating heat-insulating mat assembly according to one embodiment of the invention.

Since the method for assembling a sound-insulating heat-insulating mat assembly according to one embodiment of the invention forms the sound-insulating heat-insulating mat assembly by stacking the sound-insulating heat-insulating mats M over the joints between the heat-insulating mats m that are formed when forming the first covering layer, the second covering layer effectively absorbs sound and heat that have passed through the joints between the heat-insulating mats m to effectively insulate heat and sound generated by the covering target.

Since the method for assembling a sound-insulating heat-insulating mat assembly according to one embodiment of the invention disposes the second covering layer so that the side on which the sound-insulating sheet is provided is situated on the outer surface side, a sound having a relatively high frequency can be absorbed by the fibrous formed article that forms the first covering layer and the fibrous formed article that forms second covering layer, and a sound having a relatively low frequency that cannot be absorbed by each fibrous formed article can be reflected by the sound-insulating sheet to prevent leakage of sound to the outside.

The sound-insulating heat-insulating mat assembly produced by the assembly method according to one embodiment of the invention includes a plurality of heat-insulating mats and a plurality of sound-insulating heat-insulating mats, and can be easily produced (constructed) by sequentially stacking these mats without using a special tool.

The method for assembling a sound-insulating heat-insulating mat assembly according to one embodiment of the invention can thus easily produce (assemble) a sound-insulating heat-insulating mat assembly that exhibits excellent heat-insulating properties and sound-insulating properties.

Another embodiment of the invention provides a sound-insulating heat-insulating mat assembly integrated product in which the sound-insulating heat-insulating mat assembly according to one embodiment of the invention is integrated with the surface of the covering target. For example, the sound-insulating heat-insulating mat assembly according to one embodiment of the invention may be integrated with the surface of a turbine, a compressor, a generator, an engine, or the like as the covering target.

The invention is further described below by way of examples. Note that the following examples are intended for illustrative purposes only, and the invention is not limited to the following examples.

Example 1

(1) Production of heat-insulating mat

A ceramic fiber heat-insulating material (Fine Flex Blanket TOMBO No. 5120 manufactured by Nichias Corporation, density at room temperature (25°C): 130 kg/cm$^3$) was used as a fibrous formed article, and a glass cloth (thickness: 0.5 mm, mass (basis weight): 356 g/m$^2$) was used as an exterior material. The fibrous formed article was wrapped in the exterior material to produce four heat-insulating mats m having dimensions of $895 \times 595 \times 100$ (thickness) mm, four heat-insulating mats m having dimensions of $895 \times 600 \times 100$ (thickness) mm, and two heat-insulating mats m having dimensions of $895 \times 300 \times 300$ (thickness) mm.

(2) Production of sound-insulating heat-insulating mat

A ceramic fiber heat-insulating material (Fine Flex Blanket TOMBO No. 5120 manufactured by Nichias Corporation, density at room temperature (25°C): 130 kg/cm$^3$) was used as a fibrous formed article, a silicone-coated glass cloth (thickness: 0.3 mm, mass (basis weight): 400 g/m$^2$) was used as an exterior material, and a vinyl chloride-based sheet (Soft Calm SC-14 manufactured by Toho Zinc Co., Ltd., thickness: 1.4 mm, density at room temperature (25°C): 3.0 g/cm$^3$) was used as a sound-insulating sheet. A laminate of the fibrous formed article and the sound-insulating sheet was wrapped in the exterior material to produce four sound-insulating heat-insulating mats M having dimensions of $595 \times 895 \times 100$ (thickness) mm, two sound-insulating heat-insulating mats M having dimensions of $595 \times 900 \times 100$ (thickness) mm, two sound-insulating heat-insulating mats M having dimensions of $600 \times 895 \times 100$ (thickness) mm, and one sound-insulating heat-insulating mat M having dimensions of $600 \times 900 \times 100$ (thickness) mm.

(3) Production of sound-insulating heat-insulating mat assembly

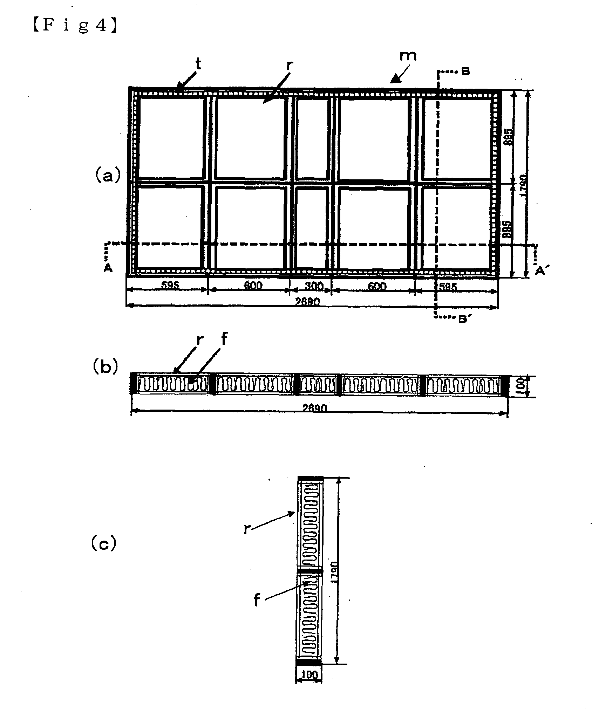

As illustrated in FIG. 4A (top view), FIG. 4B (schematic vertical cross-sectional view taken along the line A-A' in FIG. 4A), and FIG. 4C (schematic vertical cross-sectional view taken along the line B-B' in FIG. 4A), the heat-insulating mats m produced in (1) were mutually connected using an aluminum tape t (Aluminum Tape S manufactured by Nitoms, Inc.) to form a first covering layer having dimensions of 1790×2690 mm. Note that the numerical values in FIGS. 4A to 4C indicate the dimensions (mm).

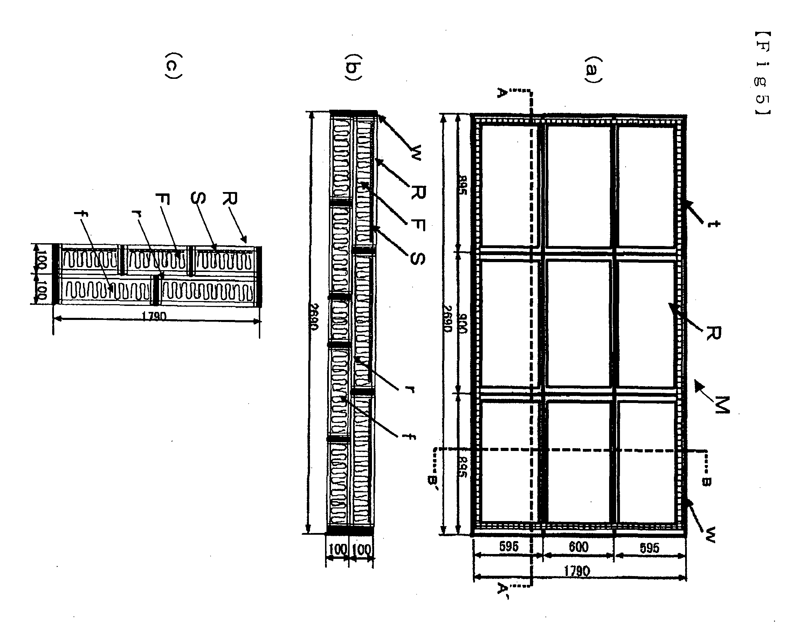

As illustrated in FIG. 5A (top view), FIG. 5B (schematic vertical cross-sectional view taken along the line A-A' in FIG. 5A), and FIG. 5C (schematic vertical cross-sectional view taken along the line B-B' in FIG. 5A), the sound-insulating heat-insulating mats M produced in (2) were placed on the first covering layer, and connected mutually using an aluminum tape t (Aluminum Tape S manufactured by Nitoms, Inc.) to form a second covering layer having dimensions of 1790×2690 mm. Note that the numerical values in FIGS. 5A to 5C indicate the dimensions (mm). The sound-insulating heat-insulating mats M were placed so that the side on which the sound-insulating sheet S was provided, was situated on the outer surface side (see FIGS. 5B and 5C).

As illustrated in FIGS. 5A to 5C, the shape and the size of the heat-insulating mats m forming the first covering layer and the sound-insulating heat-insulating mats M forming the second covering layer were designed taking account of the position of each joint when the mats are connected and stacked. The first covering layer and the second covering layer could be stacked so that the formation positions of the joints between the heat-insulating mats m forming the first covering layer did not overlap the formation positions of the joints between the sound-insulating heat-insulating mats M forming the second covering layer in the stacking direction.

As illustrated in FIGS. 5A and 5B, the outer edge of the laminate of the first covering layer and the second covering layer was secured using a wooden frame w having a thickness of 10 mm to obtain a sound-insulating heat-insulating mat assembly 1.

Evaluation of sound transmission loss properties

In a combined reverberation test room in which a sound source room (floor area: 25 m$^2$) of which the four walls were formed of reinforced concrete, and a sound-receiving room (floor area: 25 m$^2$) of which the four walls were formed of reinforced concrete, were provided adjacent to each other, and an opening having dimensions of 1800×2700 mm was formed in the wall separating the sound source room and the sound-receiving room, the sound-insulating heat-insulating mat assembly obtained in (3) was fitted into the opening so that the second covering layer was situated on the side of the sound-receiving room (i.e., the side on which the sound-insulating sheet was provided faced the sound-receiving room), and the space between the opening and the sound-insulating heat-insulating mat assembly was sealed using oil-based clay.

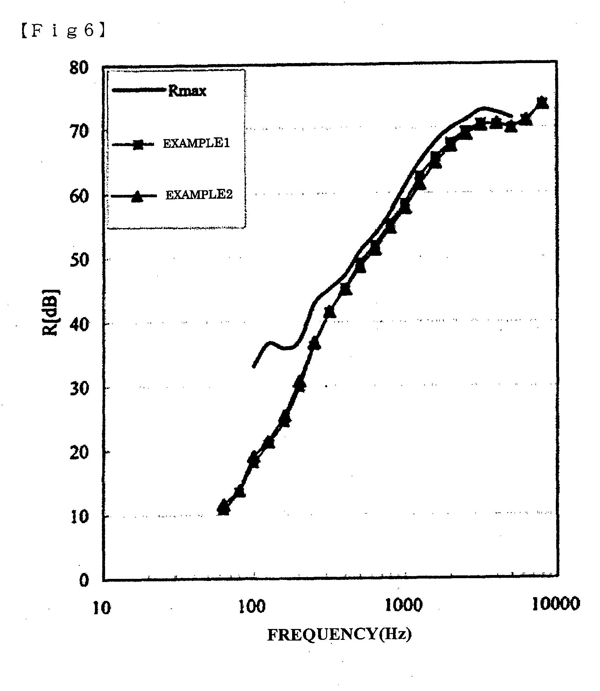

The sound source room and the sound-receiving room were designed so that a constant sound pressure was obtained over the entire room. A sound having a frequency of 63 to 8000 Hz was produced in the sound source room, and received in the sound-receiving room to measure the degree by which the sound was reduced. The results are shown in Table 1 and FIG. 6.

Table 1 and FIG. 6 show the reduction R (dB) in sound as measured in the sound-receiving room with respect to the sound produced in the sound source room. In Table 1 and FIG. 6, the measurement results obtained in Example 1 are listed in the column "With tape". Rmax in Table 1 and FIG. 6 refers to the maximum volume of sound that can be reduced theoretically.

Example 2

In example 1(3), A sound-insulating heat-insulating mat assembly was obtained in the same manner as in Example 1, except that a first covering layer having dimensions of 1790×2690 mm was formed without securing mutually the heat-insulating mats m using an aluminum tape, and a second covering layer having dimensions of 1790×2690 mm was formed without securing the sound-insulating heat-insulating mats M using an aluminum tape.

The sound transmission loss properties were evaluated in the same manner as in Example 1 using the resulting sound-insulating heat-insulating mat assembly. The results are shown in Table 1 and FIG. 6. In Table 1 and FIG. 6, the results obtained in Example 2 are listed in the column "Without tape".

TABLE 1

| Frequency (Hz) | Rmax | With tape | Without tape |
| --- | --- | --- | --- |
| 63 | | 10.8 | 11.6 |

(continued)

| Frequency (Hz) | Rmax | With tape | Without tape |
|---|---|---|---|
| 80 | | 13.5 | 13.8 |
| 100 | 33.2 | 18.0 | 19.1 |
| 125 | 36.7 | 21.0 | 21.4 |
| 160 | 35.9 | 24.3 | 25.4 |
| 200 | 37.0 | 29.8 | 30.8 |
| 250 | 42.8 | 36.3 | 36.8 |
| 315 | 45.1 | 41.5 | 41.6 |
| 400 | 47.3 | 45.3 | 45.1 |
| 500 | 50.9 | 49.2 | 48.5 |
| 630 | 53.5 | 51.9 | 51.2 |
| 800 | 56.9 | 55.2 | 54.5 |
| 1000 | 61.1 | 58.4 | 57.6 |
| 1250 | 64.7 | 62.6 | 61.3 |
| 1600 | 67.9 | 65.5 | 64.6 |
| 2000 | 69.9 | 67.7 | 67.2 |
| 2500 | 71.2 | 69.5 | 69.0 |
| 3150 | 72.7 | 70.6 | 70.4 |
| 4000 | 72.3 | 70.5 | 70.6 |
| 5000 | 71.5 | 70.0 | 70.1 |
| 6300 | | 71.0 | 71.1 |
| 8000 | | 73.6 | 73.6 |

Comparative Example 1

A ceramic fiber heat-insulating material (Fine Flex Blanket TOMBO No. 5120 manufactured by Nichias Corporation, density at room temperature (25°C): 130 kg/cm$^3$) was used as a fibrous formed article, and a glass cloth (thickness: 0.5 mm, mass (basis weight): 356 g/m$^2$) was used as an exterior material. The fibrous formed article was wrapped in the exterior material to produce four heat-insulating mats m having dimensions of 895×595×100 (thickness) mm, four heat-insulating mats m having dimensions of 895×600×100 (thickness) mm, and two heat-insulating mats m having dimensions of 895×300×300 (thickness) mm.

As illustrated in FIG. 4A (top view), FIG. 4B (schematic vertical cross-sectional view taken along the line A-A' in FIG. 4A), and FIG. 4C (schematic vertical cross-sectional view taken along the line B-B' in FIG. 4A), the heat-insulating mats m produced in (1) were connected mutually using an aluminum tape t (Aluminum Tape S manufactured by Nitoms, Inc.) to form a connected product having dimensions of 1790×2690 mm, and the outer edge of the connected product was secured using a wooden frame having a thickness of 10 mm to obtain a heat-insulating mat assembly.

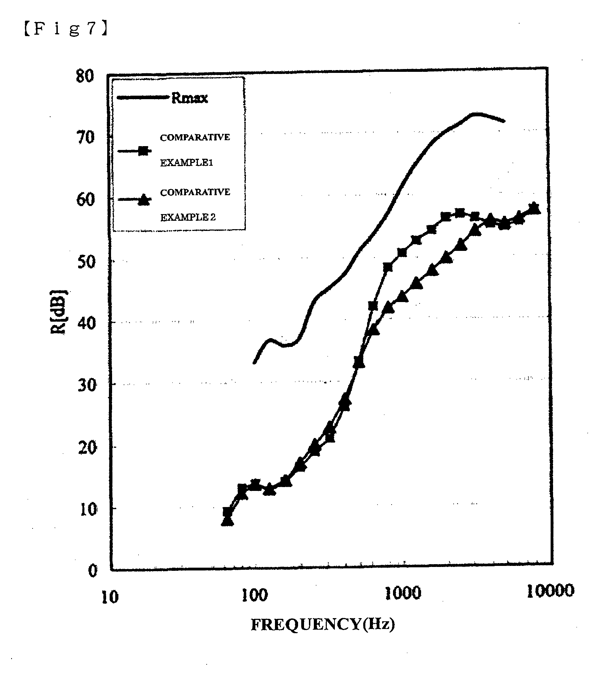

The sound transmission loss properties were evaluated in the same manner as in Example 1 using the resulting heat-insulating mat assembly. The results are shown in Table 2 and FIG. 7.

Table 2 and FIG. 7 show the reduction R (dB) in sound as measured in the sound-receiving room with respect to the sound produced in the sound source room. In Table 2 and FIG. 7, the measurement results obtained in Comparative Example 1 are listed in the column "With tape". Rmax in Table 2 and FIG. 7 refers to the maximum volume of sound that can be reduced theoretically.

Comparative Example 2

A heat-insulating mat assembly was obtained in the same manner as in Comparative Example 1, except that a connected product having dimensions of 1790×2690 mm was formed without securing mutually the heat-insulating mats m using an aluminum tape.

The sound transmission loss properties were evaluated in the same manner as in Example 1 using the resulting heat-insulating mat assembly. The results are shown in Table 2 and FIG. 7. In Table 2 and FIG. 7, the results obtained in Comparative Example 2 are listed in the column "Without tape".

TABLE 2

| Frequency (Hz) | Rmax | With tape | Without tape |
|---|---|---|---|
| 63 | | 9.3 | 8.0 |
| 80 | | 13.0 | 12.2 |
| 100 | 33.2 | 13.7 | 13.6 |
| 125 | 36.7 | 12.5 | 12.9 |
| 160 | 35.9 | 14.0 | 14.2 |
| 200 | 37.0 | 16.3 | 17.0 |
| 250 | 42.8 | 18.8 | 19.9 |
| 315 | 45.1 | 20.9 | 22.7 |
| 400 | 47.3 | 25.9 | 27.2 |
| 500 | 50.9 | 33.3 | 33.1 |
| 630 | 53.5 | 42.1 | 38.3 |
| 800 | 56.9 | 48.4 | 41.9 |
| 1000 | 61.1 | 50.7 | 43.7 |
| 1250 | 64.7 | 52.7 | 45.8 |
| 1600 | 67.9 | 54.3 | 47.9 |
| 2000 | 69.9 | 56.3 | 49.9 |
| 2500 | 71.2 | 56.9 | 51.9 |
| 3150 | 72.7 | 56.3 | 54.2 |
| 4000 | 72.3 | 55.2 | 55.9 |
| 5000 | 71.5 | 54.8 | 55.3 |
| 6300 | | 55.6 | 56.2 |
| 8000 | | 57.4 | 57.5 |

Example 3

(1) Production of heat-insulating mat

A ceramic fiber heat-insulating material (Fine Flex Blanket TOMBO No. 5120 manufactured by Nichias Corporation, density at room temperature (25°C): 130 kg/cm$^3$) was used as a fibrous formed article, and a glass cloth (thickness: 0.5 mm, mass (basis weight): 356 g/m$^2$) was used as an exterior material. The fibrous formed article was wrapped in the exterior material to produce four heat-insulating mats m having dimensions of 100×100×100 (thickness) mm.

(2) Production of sound-insulating heat-insulating mat

A ceramic fiber heat-insulating material (Fine Flex Blanket TOMBO No. 5120 manufactured by Nichias Corporation, density at room temperature (25°C): 130 kg/cm$^3$) was used as a fibrous formed article, a silicone-coated glass cloth (thickness: 0.3 mm, mass (basis weight): 400 g/m$^2$) was used as an exterior material, and a vinyl chloride-based sheet (Soft Calm SC-14 manufactured by Toho Zinc Co., Ltd., 100×200×1.4 (thickness) mm, density at room temperature (25°C): 3.0 g/cm$^3$) was used as a sound-insulating sheet. A laminate of the fibrous formed article and the sound-insulating sheet was wrapped in the exterior material to produce three sound-insulating heat-insulating mats M having dimensions of $100 \times 133 \times 100$ (thickness) mm.

(3) Production of sound-insulating heat-insulating mat assembly

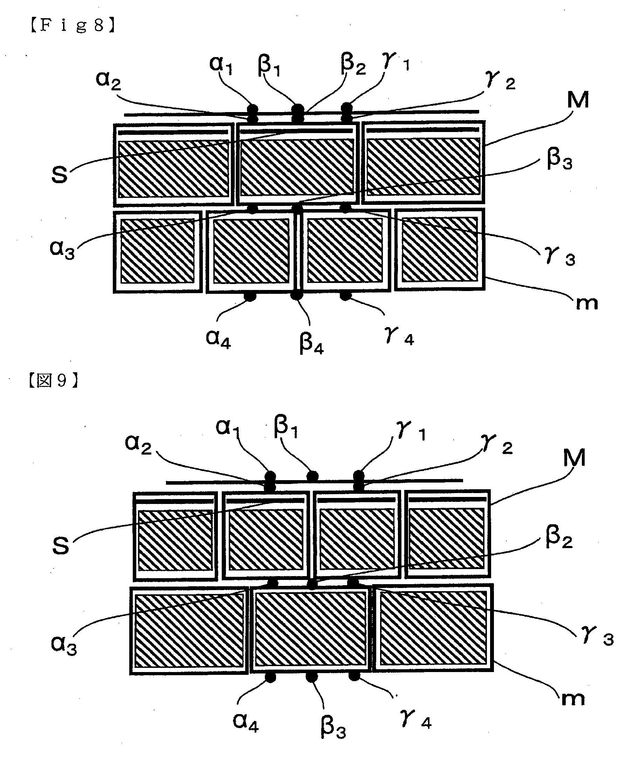

As illustrated in FIG. 8 (schematic cross-sectional view), the four heat-insulating mats m produced in (1) were connected to form a first covering layer, and the three sound-insulating heat-insulating mats M produced in (2) were placed and connected on the first covering layer so that the side on which the sound-insulating sheet S was provided was situated on the outer surface side to obtain a sound-insulating heat-insulating mat assembly.

As illustrated in FIG. 8, the shape and the size of the heat-insulating mats m forming the first covering layer and the sound-insulating heat-insulating mats M forming the second covering layer were designed taking account of the position of each joint when the mats are connected and stacked. The first covering layer and the second covering layer could be stacked so that the formation positions of the joints between the heat-insulating mats m forming the first covering layer did not overlap the formation positions of the joints between the sound-insulating heat-insulating mats M forming the second covering layer in the stacking direction.

Evaluation of heat-insulating properties

The resulting sound-insulating heat-insulating mat assembly was placed on a heating machine, and the lower part of the sound-insulating heat-insulating mat assembly was heated at 420°C (ambient temperature: 14°C) to evaluate the heat-insulating properties of the sound-insulating heat-insulating mat assembly.

Thermocouples $\alpha_1$ to $\alpha_4$, $\beta_1$ to $\beta_4$, and $\gamma_1$ to $\gamma_4$ were provided at a plurality of points in the sound-insulating heat-insulating mat assembly (see the black circles in FIG. 8), and the temperature at each point was measured after heating the sound-insulating heat-insulating mat assembly for 6 hours (i.e., until the steady state was reached). The results are shown in Table 3.

TABLE 3

| | Measured temperature (°C) | | Measured temperature (°C) | | Measured temperature (°C) |
|---|---|---|---|---|---|
| $\alpha_1$ | 21 | $\beta_1$ | 21 | $\gamma_1$ | 21 |
| $\alpha_2$ | 40 | $\beta_2$ | 30 | $\gamma_2$ | 31 |
| $\alpha_3$ | 197 | $\beta_3$ | 215 | $\gamma_3$ | 169 |
| $\alpha_4$ | 426 | $\beta_4$ | 428 | $\gamma_4$ | 428 |

Example 4

(1) Production of heat-insulating mat

A ceramic fiber heat-insulating material (Fine Flex Blanket TOMBO No. 5120 manufactured by Nichias Corporation, density at room temperature (25°C): 130 kg/cm$^3$) was used as a fibrous formed article, and a glass cloth (thickness: 0.5 mm, mass (basis weight): 356 g/m$^2$) was used as an exterior material. The fibrous formed article was wrapped in the exterior material to produce three heat-insulating mats m having dimensions of $100 \times 133 \times 100$ (thickness) mm.

(2) Production of sound-insulating heat-insulating mat

A ceramic fiber heat-insulating material (Fine Flex Blanket TOMBO No. 5120 manufactured by Nichias Corporation, density at room temperature (25°C): 130 kg/cm$^3$) was used as a fibrous formed article, a silicone-coated glass cloth (thickness: 0.3 mm, mass (basis weight): 400 g/m$^2$) was used as an exterior material, and a vinyl chloride-based sheet (Soft Calm SC-14 manufactured by Toho Zinc Co., Ltd., $100 \times 100 \times 1.4$ (thickness) mm, density at room temperature (25°C): 3.0 g/cm$^3$) was used as a sound-insulating sheet. A laminate of the fibrous formed article and the sound-insulating sheet was wrapped in the exterior material to produce four sound-insulating heat-insulating mats M having dimensions of $100 \times 100 \times 100$ (thickness) mm.

(3) Production of sound-insulating heat-insulating mat assembly

As illustrated in FIG. 9 (schematic cross-sectional view), the three heat-insulating mats m produced in (1) were connected to form a first covering layer, and the four sound-insulating heat-insulating mats M produced in (2) were placed and connected on the first covering layer so that the side on which the sound-insulating sheet S was provided was situated on the outer surface side to obtain a sound-insulating heat-insulating mat assembly.

As illustrated in FIG. 9, the shape and the size of the heat-insulating mats m forming the first covering layer and the sound-insulating heat-insulating mats M forming the second covering layer were designed taking account of the position of each joint when the mats are connected and stacked. The first covering layer and the second covering layer could be stacked so that the formation positions of the joints between the heat-insulating mats m forming the first covering layer did not overlap the formation positions of the joints between the sound-insulating heat-insulating mats M forming the second covering layer in the stacking direction.

Evaluation of heat-insulating properties

The resulting sound-insulating heat-insulating mat assembly was placed on a heating machine, and the lower part of the sound-insulating heat-insulating mat assembly was heated at 420°C (ambient temperature: 14°C) to evaluate the heat-insulating properties of the sound-insulating heat-insulating mat assembly.

Thermocouples $\alpha_1$ to $\alpha_4$, $\beta_1$ to $\beta_3$, and $\gamma_1$ to $\gamma_4$ were provided at a plurality of points in the sound-insulating heat-insulating mat assembly (see the black circles in FIG. 9), and the temperature at each point was measured after heating the sound-insulating heat-insulating mat assembly for 6 hours (i.e., until the steady state was reached). The results are shown in Table 4.

TABLE 4

|  | Measured temperature (°C) |  | Measured temperature (°C) |  | Measured temperature (°C) |
|---|---|---|---|---|---|
| $\alpha_1$ | 18 | $\beta_1$ | 18 | $\gamma_1$ | 20 |
| $\alpha_2$ | 39 | | | $\gamma_2$ | 31 |
| $\alpha_3$ | 188 | $\beta_2$ | 189 | $\gamma_3$ | 181 |
| $\alpha_4$ | 428 | $\beta_3$ | 435 | $\gamma_4$ | 431 |

As is clear from the results shown in Table 1 and FIG. 6, the sound-insulating heat-insulating mat assemblies obtained in Examples 1 and 2 in which the first covering layer and the second covering layer were stacked, showed a sound volume reduction effect comparable to the theoretical maximum sound volume reduction.

As is clear from the results shown in Tables 3 and 4, the sound-insulating heat-insulating mat assembly according to the invention exhibited sufficient heat-insulating effect.

As is clear from the results shown in Table 2 and FIG. 7, the sound-insulating heat-insulating mat assemblies obtained in Comparative Examples 1 and 2 in which the second covering layer was not used, showed an insufficient sound volume reduction effect. In particular, the sound volume reduction effect was poor in the low frequency region.

INDUSTRIAL APPLICABILITY

The invention can thus provide a sound-insulating heat-insulating mat assembly that exhibits excellent heat-insulating properties and sound-insulating properties, and can be easily produced (constructed), and a method that can easily assemble the sound-insulating heat-insulating mat assembly.

REFERENCE SIGNS LIST

1　　　Sound-insulating heat-insulating mat assembly
2　　　Covering target
E, e　　Edge part
F, f　　Fibrous formed article
R, r　　Exterior material
S　　　Sound-insulating sheet
m　　　Heat-insulating mat
M　　　Sound-insulating heat-insulating mat
d　　　Stacking direction

c       Joint

**Claims**

1. A sound-insulating heat-insulating mat assembly comprising a first covering layer formed by connecting a plurality of heat-insulating mats, and a second covering layer formed by connecting a plurality of sound-insulating heat-insulating mats, the first covering layer and the second covering layer being sequentially stacked on a covering target, each of the plurality of heat-insulating mats being formed by wrapping a fibrous formed article in an exterior material, each of the plurality of sound-insulating heat-insulating mats being formed by wrapping a laminate of a fibrous formed article and a sound-insulating sheet in an exterior material, and
the second covering layer being formed by connecting the plurality of sound-insulating heat-insulating mats so that a side on which the sound-insulating sheet is provided is situated on an outer surface side, and being stacked so that at least some of joints between the plurality of sound-insulating heat-insulating mats that form the second covering layer do not overlap formation positions of joints between the plurality of heat-insulating mats that form the first covering layer in a stacking direction.

2. The sound-insulating heat-insulating mat assembly according to claim 1, wherein the fibrous formed article that forms each of the plurality of heat-insulating mats is formed of inorganic fibers or organic fibers, the exterior material that forms each of the plurality of heat-insulating mats is formed of an inorganic fiber cloth, the fibrous formed article that forms each of the plurality of sound-insulating heat-insulating mats is formed of inorganic fibers or organic fibers, the exterior material that forms each of the plurality of sound-insulating heat-insulating mats is formed of an inorganic fiber cloth, and the sound-insulating sheet is formed of a resin, a metal, a composite material of a resin and a metal, or a composite material that includes a synthetic rubber, heat-resistant fibers, an inorganic filler, and a vulcanizing agent.

3. The sound-insulating heat-insulating mat assembly according to claim 1 or 2, wherein the covering target is an apparatus that generates low-frequency operating noise.

4. A method for assembling a sound-insulating heat-insulating mat assembly comprising placing and connecting a plurality of heat-insulating mats on a surface of a covering target to form a first covering layer, and placing and connecting a plurality of sound-insulating heat-insulating mats on the first covering layer to form a second covering layer,
each of the plurality of heat-insulating mats being formed by wrapping a fibrous formed article in an exterior material, each of the plurality of sound-insulating heat-insulating mats being formed by wrapping a laminate of a fibrous formed article and a sound-insulating sheet in an exterior material, and
the second covering layer being formed by connecting the plurality of sound-insulating heat-insulating mats so that a side on which the sound-insulating sheet is provided is situated on an outer surface side, and being stacked so that at least some of joints between the plurality of sound-insulating heat-insulating mats that form the second covering layer do not overlap formation positions of joints between the plurality of heat-insulating mats that form the first covering layer in a stacking direction.

5. The method for assembling a sound-insulating heat-insulating mat assembly according to claim 4, wherein the fibrous formed article that forms each of the plurality of heat-insulating mats is formed of inorganic fibers, the exterior material that forms each of the plurality of heat-insulating mats is formed of an inorganic fiber cloth, the fibrous formed article that forms each of the plurality of sound-insulating heat-insulating mats is formed of inorganic fibers, the exterior material that forms each of the plurality of sound-insulating heat-insulating mats is formed of an inorganic fiber cloth, and the sound-insulating sheet is formed of a resin, a metal, or a composite material of a resin and a metal.

6. The method for assembling a sound-insulating heat-insulating mat assembly according to claim 4 or 5, wherein the covering target is an apparatus that generates low-frequency operating noise.

【Fig1】

(a)

m

A————————————A'

r

(b)

r

f

(c)

m

e

r

(d)

r

e

f

【Ｆｉｇ２】

(a)

M

B ---------- B'

R

(b)

S

R

F

(c)

M

R

E

(d)

E

S

R

F

【Fig 3】

【Fig4】

(a)

(b)

(c)

【Fig5】

(a)

(b)

(c)

【Fig6】

[Fig 7]

【Fig 8】

$\alpha_2$ $\alpha_1$ $\beta_1$ $\beta_2$ $\gamma_1$ $\gamma_2$ M

S $\beta_3$

$\alpha_3$ $\gamma_3$

m

$\alpha_4$ $\beta_4$ $\gamma_4$

【図9】

$\alpha_2$ $\alpha_1$ $\beta_1$ $\gamma_1$ $\gamma_2$ M

S $\beta_2$

$\alpha_3$ $\gamma_3$

m

$\alpha_4$ $\beta_3$ $\gamma_4$

**INTERNATIONAL SEARCH REPORT**

International application No.

PCT/JP2013/053401

| A. CLASSIFICATION OF SUBJECT MATTER |
|---|
| *F16L59/00*(2006.01)i, *B32B5/26*(2006.01)i, *G10K11/16*(2006.01)i |

According to International Patent Classification (IPC) or to both national classification and IPC

| B. FIELDS SEARCHED |
|---|
| Minimum documentation searched (classification system followed by classification symbols) |
| F16L59/00-59/22, B32B5/26, G10K11/16, E04B1/74-1/90 |

Documentation searched other than minimum documentation to the extent that such documents are included in the fields searched

| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | Microfilm of the specification and drawings annexed to the request of Japanese Utility Model Application No. 91987/1983(Laid-open No. 196607/1984)<br>(Nichias Corp.),<br>27 December 1984 (27.12.1984),<br>entire text; all drawings<br>(Family: none) | 1-6 |
| A | Microfilm of the specification and drawings annexed to the request of Japanese Utility Model Application No. 150373/1974(Laid-open No. 76113/1976)<br>(Ogawa Trading Kabushiki Kaisha),<br>15 June 1976 (15.06.1976),<br>entire text; all drawings<br>(Family: none) | 1-6 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 April, 2013 (17.04.13) | 07 May, 2013 (07.05.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/053401

C (Continuation).  DOCUMENTS CONSIDERED TO BE RELEVANT

| Category* | Citation of document, with indication, where appropriate, of the relevant passages | Relevant to claim No. |
|---|---|---|
| A | JP 44-11110 B1  (Hiroo CHIGIRA),<br>22 May 1969 (22.05.1969),<br>entire text; all drawings<br>(Family: none) | 1-6 |
| A | WO 2004/008017 A1  (Paramount Glass<br>Manufacturing Co., Ltd.),<br>22 January 2004 (22.01.2004),<br>entire text; all drawings<br>& JP 4361863 B2          & US 2005/0202189 A1<br>& US 2008/0176014 A1     & EP 1541916 A1<br>& AU 2003248272 A        & KR 10-2005-0034711 A | 1-6 |
| A | US 6635329 B1  (Rainer ARNDT),<br>21 October 2003 (21.10.2003),<br>entire text; all drawings<br>& EP 958471 A1           & WO 1999/030074 A1<br>& DE 19848677 A1         & DE 19848679 A1<br>& CA 2278856 A1          & ES 2205600 T3 | 1-6 |
| A | US 6551951 B1  (Ralph Michael FAY),<br>22 April 2003 (22.04.2003),<br>entire text; all drawings<br>& EP 1134479 A2          & DE 60122228 T2<br>& CA 2340613 A1 | 1-6 |
| A | JP 2001-295985 A  (Isuzu Motors Ltd.),<br>26 October 2001 (26.10.2001),<br>entire text; all drawings<br>(Family: none) | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2049435 A